**Europäisches Patentamt**

**European Patent Office**

**Office européen des brevets**

(19)

(11) Veröffentlichungsnummer: **0 157 255**
**B1**

(12) # EUROPÄISCHE PATENTSCHRIFT

(45) Veröffentlichungstag der Patentschrift:
**31.05.89**

(51) Int. Cl.⁴: **B 22 D 11/16,** G 01 F 23/00,
**B 22 D 11/04**

(21) Anmeldenummer: **85102971.0**

(22) Anmeldetag: **14.03.85**

(54) **Niveaumesser für Kokillen zum Stranggiessen.**

(30) Priorität: **19.03.84 SE 8401505**

(43) Veröffentlichungstag der Anmeldung:
**09.10.85 Patentblatt 85/41**

(45) Bekanntmachung des Hinweises auf die Patenterteilung:
**31.05.89 Patentblatt 89/22**

(84) Benannte Vertragsstaaten:
**CH DE FR GB IT LI**

(56) Entgegenhaltungen:
**EP-A-0 063 072**
**DE-A-2 101 729**
**DE-B-2 527 324**

(73) Patentinhaber: **ASEA AB, S-721 83 Västeras (SE)**

(72) Erfinder: **Kollberg, Sten, Dipl.- Ing.,
Nordanbygatan 58, S-722 23 Västeras (SE)**

(74) Vertreter: **Boecker, Joachim, Dr.- Ing.,
Rathenauplatz 2-8, D-6000 Frankfurt a.M. 1 (DE)**

## Beschreibung

Die vorliegende Erfindung betrifft einen Anordnung zur Niveaumesseung an Kokillen zum Stranggießen gemäß dem Oberbegriff des Anspruches 1.

Solche Niveaumesser bestehen häufig aus einer Strahlungsquelle und einem Detektor, welche an einer Kokille mit Umrührern für Barren, Luppen oder Brammen angeordnet sind. Aus der EP-A-0 063 072 ist ein Niveaumesser bekannt, bei dem eine radioaktive Strahlungsquelle außerhalb der Kokille am Umrührer angeordnet ist und auf einen Detektor strahlt, der auf der radial gegenüberliegenden Seite der Kokille angeordnet ist, wobei mindestens ein Schlitz in dem Umrührer mit seinem Eisenkern angeordnet ist, durch welchen die Strahlen hindurchtreten können, so daß ein Maß für das Niveau gewonnen werden kann. Die den Umrührer hierbei bildenden Spulen sind dabei asymmetrisch angeordnet. Normalerweise besteht ein Umrührer für eine Kokille für beispielsweise im Querschnitt runde Barren aus mehreren, zum Beispiel sechs Spulen, die symmetrisch auf einem Kreis oder dergl. um die Kokille herum angeordnet sind. Die vorgenannte assymetrische Spulenanordnung verursacht Komplikationen und liefert keine völlig zufriedenstellende Möglichkeit für eine Niveaumessung.

Am günstigsten ist es, wenn der Detektor und/oder die Strahlungsquelle des Niveaumessers auf dem gleichen Niveau wie der Meniskus (größte Höhe der Schmelze) angeordnet sind/ist, was jedoch beim Stande der Technik mit Schwierigkeiten verbunden ist. Man ist gezwungen, den Umrührer abzusenken, wodurch die Wirksamkeit des Umrührens vermindert wird.

Der Erfindung liegt die Aufgabe zugrunde, einen Niveaumesser der eingangs genannten Art zu entwickeln, welcher in der günstigsten Höhe angeordnet ist, ohne daß dies mit einer merklichen Verminderung der Rührwirkung verbunden ist.

Zur Lösung dieser Aufgabe wird eine Anordnung zur Niveaumessung an Kokillen zum Stranggießen gemäß dem Oberbegriff des Anspruches 1 vorgeschlagen, welcher erfindungsgemäß die im kennzeichnenden Teil des Anspruches 1 genannten Merkmale hat.

Vorteilhafte Ausgestaltungen der Erfindung sind in den weiteren Ansprüchen genannt.

Durch die Erfindung wird erreicht, daß die Strahlungsquelle und/oder der Detektor des Niveaumessers auf dem Niveau des Meniskus liegt/liegen, ohne daß es erforderlich ist, einen großen Teil des Umrührers tiefer zu plazieren. Vielmehr kann der Umrührer trotz der günstigen Anordnung des Niveaumessers die für die Umrührung günstigste Position einnehmen. Gleichzeitig erhält man eine wirksame Niveaumessung.

Anhand der in den Figuren gezeigten Ausführungsbeispiele soll die Erfindung näher erläutert werden. Es zeigen

Figur 1   die mögliche Anordnung einer nicht zur Erfindung gehörenden Niveaumessanordnung,

Figur 2   im Querschnitt einen um eine Kokille angeordneten Umrührer zum kontinuierlichen Gießen,

Figur 3   die Ansicht eines in eine Ebene abgewickelten Umrührers mit zwei Ausführungsformen der Erfindung,

Figur 4
- 6   drei weitere Ausführungsbeispielen der Erfindung

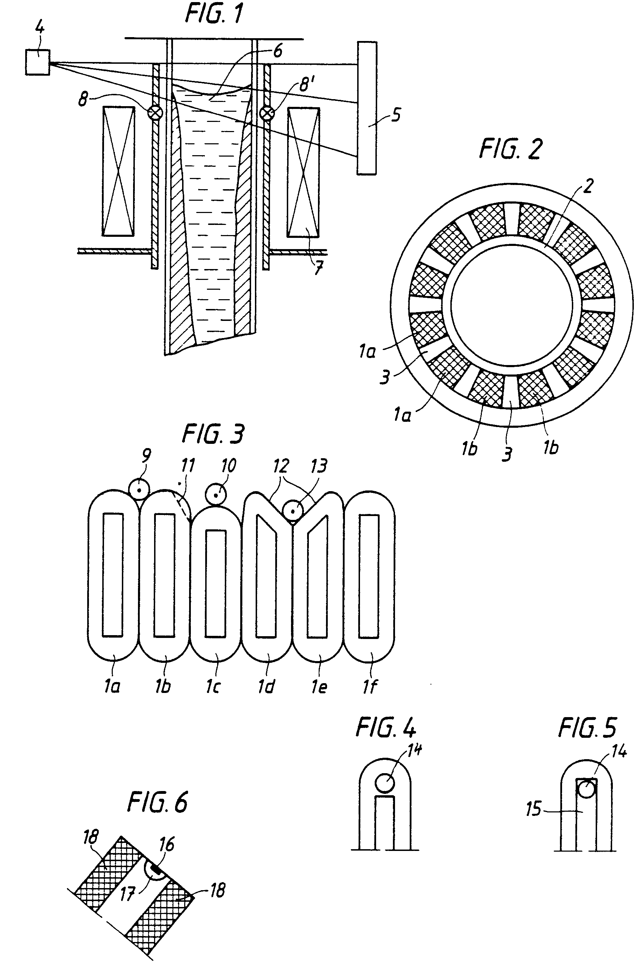

Figur 2 zeigt einen Umrührer 1 mit mehreren Spulen 1a, 1b usw., die um ein gekühltes Kupferrohr 2 herum angeordnet sind, das als Kokille beim Stranggießen von Barren dient. Mit 3 sind die Pole des Eisenkerns für die Spulen 1a bzw. 1b bezeichnet.

Figur 1 zeigt eine denkbare Anordnung eines Niveaumessers mit einer Strahlenquelle 5 und einen Detektor 4. Man erkennt, daß der Niveaumesser relativ zum Meniskus 6 nur dann hoch liegt, wenn die Strahlung entweder einen Schlitz im Eisenkern des Umrührers passieren kann oder gerade durch den Eisenkern hindurchgeht. Im letztgenannten Falle muß die Strahlenquelle erheblich stärker sein.

Figur 3 zeigt mehrere auf ihren Polkernen angeordnete Spulen 1a, 1b bis 1f, die kreisförmig um die Kokille herum angeordnet sind, wie es Figur 2 zeigt. Die bekannte Anordnung des Niveaumessers ist bei 9 angedeutet. Indem die Höhe von Spule mit Polkern für eine, zwei oder mehrere Spulen 1c verkleinert wird, gewinnt man Raum für die Strahlungsquelle und/oder den Detektor 10, und man erkennt, daß man auf diese Weise ohne Spaltbildung zwischen den Spulen eine günstige Anordnung des Niveaumessers ohne Dämpfung der das Niveau anzeigenden Meßsignale erreicht wird. Die Spulen 1a und 1b usw. können nach oben geschoben werden.

Alternativ kann die Spule oder der Polkern (1b) mit einer Abschrägung 11 versehen werden, wodurch ein Freiraum gewonnen wird, oder ein solcher Raum kann zwischen zwei Abschrägungen 12 gebildet werden. In dem zwischen diesen Abschrägungen 12 gewonnenen Raum wird der Niveaumesser, d. h. die Strahlungsquelle und/oder der Detektor (10, 13), angeordnet. Auch hierdurch erreicht man eine optimale Platzierung des Niveaumessers.

Figur 4 zeigt eine Ausführungsform, bei der in der Spule ein Loch 14 für das eine oder beide der genannten Teile des Niveaumessers vorgesehen ist, wobei es sich um ein durchgehendes Loch handeln kann. Im Ausführungsbeispiel nach Figur 5 ist ein Loch 14 im Eisen des Polkerns angebracht, so daß auch hier die Spule hochgeschoben werden kann.

Figur 6 zeigt ein weiteres Ausführungsbeispiel zum Einsparen von Platz. Hier ist im Pol eine Aussparung 16 für eine als Strahlungsquelle dienende radioaktive Substanz vorgesehen, die eventuell mit einem schützenden Rohr oder einer Umhüllung 17 versehen ist, wie zum Beispiel einem Bleirohr, in der Spule 18.

Die Anordnung nach der Erfindung kann auch beim Stranggießen von Rohlingen mit einem nicht kreisförmigen Querschnitt verwendet werden, wie beispielsweise für Barren, Luppen und evtl. auch Brammen.

## Patentansprüche

1. Anordnung zur Niveaumessung an Kokillen zum Stranggießen, wobei die Kokille von einem ringförmigen mehrphasigen elektromagnetischen Umrührer (7) umgeben ist, der aus einem in Umfangsrichtung ununterbrochenen Kern (3) mit sich radial nach innen erstreckenden Polen aufgebaut ist, auf denen Wicklungen (1a - 1f) aufgebracht sind, die in Umfangsrichtung miteinander in Kontakt stehen und keine Zwischenräume in Umfangsrichtung bilden, dadurch gekennzeichnet, daß die Niveaumeßanordnung einen Detektor und eine Strahlungsquelle (10, 13) umfaßt, die in Bezug auf die Kokille einander diametral gegenüberliegend in Aussparungen (12, 13, 14, 16) in einer oder mehreren Spulen oder Polkernen unterhalb des oberen Begrenzungsniveaus der unverkürzten Spulen des Umrührers angeordnet sind.

2. Niveaumesser nach Anspruch 1, dadurch gekennzeichnet, daß eine oder mehrere der Spulen, evtl. zwei sich in bezug auf die Kokille diametral gegenüberliegende Spulen (1c) in ihrer Höhe verkürzt sind und daß der Detektor und/oder die Strahlungsquelle (10, 13) in dem durch die Verkürzung gewonnenen Raum untergebracht sind/ist.

3. Niveaumesser nach Anspruch 1, dadurch gekennzeichnet, daß der Wicklungsteil und/oder der Polkern einer oder mehrerer Spulen mit Löchern (14) versehen sind/ist, in welchen der Detektor und/oder die Strahlungsquelle (10, 13) fü den Niveaumesser untergebracht sind/ist.

4. Niveaumesser nach Anspruch 1, dadurch gekennzeichnet, daß ein oder mehrere aus Spule und Polkern bestehende Pole des Umrührers mit einer Aussparung (16) versehen ist/sind, in welcher eine punkt- oder stabförmige Strahlungsquelle für den Niveaumesser, beispielsweise in Form einer radioaktiven Substanz, untergebracht ist.

5. Niveaumesser nach Anspruch 4, dadurch gekennzeichnet, daß die Aussparung mit einer schützenden Umhüllung (17), beispielsweise einem Bleirohr, versehen ist.

6. Niveaumesser nach Anspruch 1, dadurch gekennzeichnet, daß eine oder mehrere Spulen oder Eisenkerne abgeschrägt ausgebildet sind, wobei in dem durch die Abschrägung gebildeten Raum (12) ein Detektor und/oder eine Strahlungsquelle für den Niveaumesser untergebracht sind/ist.

## Claims

1. Arrangement for measuring the liquid level in a continuous casting mould with the mould being surrounded by an annular multi-phase electromagnetic-stirrer (7) comprising a circumferentially continuous core (3) with radially inwardly extending poles which carry coils (1a - f) contacting one another circumferentially without forming gaps in between, characterized in that the level measuring arrangement comprises a detector and a radiation source (10, 13) being positioned, with respect to the mould, diametrically opposed to each other within recessed (12, 13, 14, 16) provided in one or several coils or pole pieces below the upper terminating plane defined by the vertically undiminished coils of the stirrer.

2. Level measuring device according to claim 1, characterized in that one or several coils, possibly two coils which are diametrically opposed to each other with respect to the mould, have a diminished height and that the detector and/or the radiation source (10, 13) are/is positioned in the space attained by said reduction in height.

3. Level measuring device claim 1, characterized in that the winding part and/or the pole piece of one or several coils are/is provided with holes (14) which accommodate the detector and/or the radiation source (10, 13) of the level measuring device.

4. Level measuring device according to claim 1, characterized in that one or several poles of the stirrer, each pole consisting of a coil and a pole piece, is/are provided with a recess (16), which accommodates a point-shaped or bar-shaped radiation source of the level measuring device, for example in the form of a radioactive substance.

5. Level measuring device according to claim 4, characterized in that the recess is provided with a protecting shielding (17), for example a lead tube.

6. Level measuring device according to claim 1, characterized in that one or several coils or pole pieces are formed with a beveled portion with a detector and/or a radiation source of the level measuring device positioned in the space (12) attained by said bevel.

## Revendications

1. Dispositif de mesure du niveau dans des lingotières de coulée continue, la lingotière étant entourée d'un dispositif de brassage électromagnétique polyphasé (7) annulaire, qui est constitué d'un noyau (3) ininterrompu dans le sens périphérique, avec des pôles qui s'étendent radialement vers l'intérieur et sur lesquels sont fixés des enroulements (1a à 1f) qui sont en contact les uns avec les autres dans la direction périphérique et ne forment pas d'intervalle dans la direction périphérique, caractérisé en ce que le dispositif de mesure du niveau comprend un détecteur et une source de rayonnement (10, 13) qui sont disposés dans des évidements (12, 13, 14, 16) diamétralement opposés l'un à l'autre par rapport à la lingotière et ménagés dans une ou dans plusieurs bobines ou noyaux polaires en dessous du niveau limite supérieur de la bobine du dispositif de brassage, qui n'est pas raccourcie.

2. Dispositif de mesure du niveau suivant la revendication 1, caractérisé en ce que l'une ou plusieurs des bobines, éventuellement deux d'entre elles sont raccourcies en hauteur par rapport à la bobine (1c) diamétralement opposée sur la lingotière et en ce que le détecteur et/ou la source de rayonnement (12, 13) est logé dans l'espace procuré par ce raccourcissement.

3. Dispositif de mesure du niveau suivant la revendication 1, caractérisé en ce que la partie de l'enroulement et/ou le noyau polaire d'une ou de plusieurs bobines est muni de trous (14) dans lesquels sont logés le détecteur et/ou la source de rayonnement (10, 13) du dispositif de mesure du niveau.

4. Dispositif de mesure du niveau suivant la revendication 1, caractérisé en ce qu'un ou plusieurs pôles, constitués d'une bobine et d'un noyau polaire, du dispositif de brassage est muni d'un évidement (16) dans lequel est logée une source de rayonnement ponctuelle ou en forme de barreau du dispositif de mesure du niveau, par exemple sous la forme d'une substance radioactive.

5. Dispositif de mesure du niveau suivant la revendication 4, caractérisé en ce que l'évidement est muni d'une enveloppe de protection (17), par exemple d'un tube en plomb.

6. Dispositif de mesure du niveau suivant la revendication 1, caractérisé en ce qu'une ou plusieurs bobines ou noyaux de fer sont biseautées, un détecteur et/ou une source de rayonnement du dispositif de mesure du niveau étant logé dans l'espace (12) formé par le biseau.

EP 0 157 255 B1

FIG. 1

FIG. 2

FIG. 3

FIG. 4

FIG. 5

FIG. 6